(19) Europäisches Patentamt
European Patent Office
Office européen des brevets

(11) Publication number: **0 066 660**
**B1**

(12) **EUROPEAN PATENT SPECIFICATION**

(45) Date of publication of patent specification: **04.12.85**

(51) Int. Cl.$^4$: **B 23 K 35/362**

(21) Application number: **81306195.9**

(22) Date of filing: **31.12.81**

# (54) Basic bonded fluxes for submerged arc welding having an excellent removability of slag at a narrow groove.

(30) Priority: **05.06.81 JP 85614/81**

(43) Date of publication of application:
**15.12.82 Bulletin 82/50**

(45) Publication of the grant of the patent:
**04.12.85 Bulletin 85/49**

(84) Designated Contracting States:
**AT DE FR GB NL SE**

(56) References cited:
**FR-A-2 255 992**
**GB-A-1 377 961**
**GB-A-2 026 042**
**US-A-3 001 898**

**PATENTS ABSTRACTS OF JAPAN, vol. 5, no. 162, 17th October 1981, page 108M92**

**The file contains technical information submitted after the application was filed and not included in this specification**

(73) Proprietor: **KAWASAKI STEEL CORPORATION**
**1-28, Kita Hom-Machidori 1-Chome**
**Chuo-Ku, Kobe-Shi Hyogo-Ken (JP)**

(72) Inventor: **Tokuhisa, Masaaki**
**1822-27, Kasori-cho**
**Chiba City (JP)**
Inventor: **Hirai, Yukio**
**638-21 Nitona-Cho**
**Chiba City (JP)**

(74) Representative: **Overbury, Richard Douglas et al**
**HASELTINE LAKE & CO Hazlitt House**
**28 Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 066 660 B1**

**Description**

The present invention relates to basic bonded fluxes for submerged arc welding and aims to improve the removability of slag when a weld bead is deposited in a narrow groove in steel plates having a particularly large thickness by a submerged arc welding process using a one pass-one layer technique and to stabilize the molten metal flow movement in the weld puddle to prevent the formation of welding defects and increase the qualities of the weld joint.

As the highly reliable welding process for steel materials having a very large thickness, such as offshore structures, nuclear reactors, pressure vessels and the like, submerged arc welding has been generally advantageously used and a prior embodiment of a weld joint configuration and a welding sequence is shown in Fig. 1 of the accompanying drawings. In general, the width W of the bottom of the groove is about more than 25 mm and the bead is deposited in multi-layers with two or more passes.

The reason why such a broad groove is adopted is that it is difficult to remove slags formed at every pass in a narrow groove where the distance of the groove is small. The removability of the slags is noticeably deteriorated and this causes problems in the welding workability and further welding defects, such as slag inclusion and lack of fusion, are readily caused.

For a conventional broad groove, the number of welding passes is noticeably increased particularly in heavy plates having a larger thickness than 50 mm and therefore a large amount of welding materials and a long arc time are required and the efficiency becomes very poor.

In general, welding fluxes are classified into acidic fluxes and basic fluxes. When acidic fluxes are used, the oxygen content of the weld metal is very high and therefore it is difficult to obtain excellent toughness and, since a large amount of diffusible hydrogen is contained in the weld metal, hydrogen cracks are induced in welded joints having a large thickness.

On the other hand, oxygen and diffusible hydrogen levels in the weld metal in the case of basic fluxes may be lower than those in the case of acidic fluxes and basic fluxes are effective for improving the joint qualities. However, a basic weld slag has a generally crystalline structure which is strong and difficult to crush and the operation for removing the weld slag is very difficult.

The applicant has already proposed in Japanese Patent application No. 164,692/79 that the removability of the slag is effectively improved by selecting the composition of the flux such that it mainly forms crystals of periclase (MgO) and barium mica ($BaMg_3Al_2Si_2O_{10}F_2$) in the slag after welding.

When a groove having a narrow gap is subjected to submerged arc welding using a one pass-one layer technique a shown in Fig. 2 of the accompanying drawings and the above described flux, it has been necessary to cause a moderate arc blow by severely controlling the height of the flux dispersed to $45 \pm 5$ mm in order to form a concaved weld bead surface and the control of the welding conditions becomes troublesome. Thus, in order to investigate this, the inventors have in detail observed and checked the phenomenon of the molten pool by using an X-ray image amplifier apparatus and, as a result, it has been found that when welding defects, such as inadequate bead surface, undercut and slag inclusion and the like occur, the flow of molten metal in the weld puddle is very unstable and that since the structure of the weld slag is crystalline, the slag wedged in the undercut is difficult to crush and remove.

Thus, the inventors have made various investigations with respect to the flux composition in order to overcome the above described problems in narrow gap submerged arc welding so that the molten metal's flow in the weld puddle is stabilized, the formation of welding defects is forestalled, and the weld slag is easily crushed and removed. It has been found that by using a flux composition which forms crystals of periclase (MgO) and barium mica ($BaMg_3Al_2Si_2O_{10}F_2$) in the weld slag, which contains not more than 10% by weight of CaO, 10 to 60% by weight of metal carbonates and 7 to 18% by weight of $CaF_2$, and which has a basicity of 2.3 to 4.5 as represented by the ratio of the basic component to the acidic component in the flux viz

$$BR = \frac{MgO + BaO + CaO + CaF_2}{SiO_2 + Al_2O_3 + TiO_2 + MnO + ZrO_2}$$

the molten metal's flow in the weld puddle is stabilized, the formation of welding defects in noticeably suppressed and, since the weld slag does not undergo a volume expansion in the cooling process after solidification of the weld slag and in addition to fragile slag is generated, the removing operation is far more easy than in the prior art.

These fluxes are highly basic and contain a large amount of metal carbonates, so that oxygen and diffusible hydrogen in the weld metal are at very low levels, and are effective for improving the mechanical properties and cold cracking sensitivity.

Accordingly, the present invention provides a basic bonded flux for submerged arc welding and having a composition such that crystals of periclase and barium mica are formed in the slag after welding characterised in that the flux comprises:

(i) from 10 to 60% by weight of one or more metal carbonates as gas forming component, and

(ii) a slag forming component comprising BaO, MgO, $SiO_2$, $Al_2O_3$, $CaF_2$ and optionally CaO,

wherein the flux comprises from 5 to 20% by weight of BaO, not more than 10% by weight of CaO, from 20 to 50% by weight of MgO, from 6 to 25% by weight of $SiO_2$, from 3 to 15% by weight of $Al_2O_3$ and from 7 to

18% by weight of CaF, the values for BaO, CaO and MgO including any $BaCO_3$, $CaCO_3$ and $MgCO_3$, expressed as oxide, present in the gas forming component and the basicity of the flux, expressed as the ratio between the basic and acidic components of the flux, being from 2.3 to 4.5.

For a better understanding of the invention, and to show how the same may be carried out, reference will be made to the accompanying drawings, wherein:

Fig. 1 is a cross-sectional view showing a groove configuration and a weld sequence of the prior art;

Fig. 2 is a schematic view for illustrating a narrow gap groove configuration and a weld sequence, to which the flux of the present invention can be applied;

Fig. 3 is a graph illustrating the thermal contraction of slags in the cooling process after solidification;

Fig. 4 is a diagrammatic view of an apparatus for measuring the thermal contraction behaviour of slags;

Figs. 5 and 6 are cross-sectional views showing the groove configurations used in Examples 1 and 2, and Examples 3, 4 and 5 respectively; and

Fig. 7 is a graph showing the weld cracking test result of Example 4.

In the present invention, the content of BaO, CaO and MgO among the slag forming components includes an amount corresponding to the values obtained by calculating, as oxides, any carbonates of these metals which are incorporated as gas forming components. Preferably, the metal carbonates comprise $BaCO_3$ in an amount of from 8 to 25% by weight, $CaCO_3$ in an amount of from 2 to 15% by weight and a total amount of at least one of $Li_2CO_3$, $Na_2CO_3$, $MnCO_3$ and $MgCO_3$ of from 4 to 15% by weight, based on the total flux. When the fluxes of the present invention contain metal powders, the amount is not more than 20% by weight of the flux.

In the present invention, the weld slag composed of crystals of periclase (MgO) and barium silica ($BaMg_3Al_2Si_2O_{10}F_2$) undergoes little volume expansion but shows a remarkable volume contraction and is easily removed, so that the present invention can be usually applied to multi-layer submerged arc welding using the one pass-one layer technique and a narrow groove having a root gap of less than 25 mm.

When using the fluxes of the present invention, the removability of slag is excellent and the flow of molten metal in the weld puddle is stabilized during welding, so that defects such as undercut, slag inclusion and the like are not caused and even in grooves in thick steel plates having a root gap of less than 25 mm as shown in Fig. 2, weld joints can be built up by only one pass per one layer up to about 150 mm in thickness and the required number of passes can be reduced to $\frac{1}{3}$ to $\frac{1}{2}$ as compared with the prior art and welding materials, labor cost, and electric energy can be greatly saved.

An explanation will be made hereinafter with respect to the function of each component of the fluxes of the present invention and to the selection of the component range.

MgO is the main component of periclase and barium mica which are useful as the crystals in the weld slag and a content of from 20 to 50% by weight in the flux is necessary in order to ensure excellent removability of slag. When MgO is less than 20% by weight, the formation of the above described crystals in the weld slag is insufficient and the removability of slag from the narrow groove is considerably deteriorated. On the other hand, when MgO excees 50% by weight, the removability of slag is not influenced but the melting point of the slag is excessively raised and therefore the bead configuration becomes inferior and the side wall fusion becomes irregular and lack of fusion and slag inclusion are caused. As an MgO source other than magnesia clinker MgO, magnesite $MgCO_3$, dolomite $MgCO_3.CaCO_3$ and the like may be used in an amount calculated as MgO within the described range.

BaO is the main component to form barium mica crystals in the weld slag and contributes to improving the removability of slag owing to the coexistence with periclase. For the purpose, it is necessary for the flux to contain 5 to 20% by weight of BaO.

When BaO is less than 5% by weight in the flux, barium mica crystals are not sufficiently formed and the effect of improving the removability of slag is not realized. When BaO exceeds 20% by weight, the ripple pattern of the weld bead becomes rough and fine slag flakes are liable to remain on the bead surface and the bead appearance is deteriorated. As BaO source in this case, barium carbonate, barium oxide and the like are used and, in the case of $BaCO_3$, it is added in an amount calculated as BaO.

The upper limit on the amount of CaO added is controlled by the fact that easy crushing of the weld slag including periclase and barium mica crystals is desired. That is, when CaO exceeds 10% by weight in the flux, the weld slag becomes so hard on solidification that it resembles cement and the removability of slag becomes poor and in particular, when undercutting occurs because of inadequate welding conditions or erroneous electrode working position, a large amount of labor time is needed for removal of the slag in the undercut portion. As CaO source in this case, mention may be made of wollastonite, calcium carbonate, dolomite and, in the case of $CaCO_3$, it is added in an amount calculated as CaO.

$SiO_2$ needs to be added in an amount of from 6 to 25% by weight to the flux for formation of barium mica with MgO and BaO. In an amount of less than 6% by weight, barium mica is not sufficiently formed and the removability of slag is inferior. When the amount exceeds 25% by weight, the ripple pattern of the bead becomes rough and the slag is wedged at the ripple valley and the removability of the slag is deteriorated.

$Al_2O_3$ is a component of barium mica and should be present in an amount of from 3 to 15% by weight in the flux. When the amount is less than 3% by weight, barium mica crystals are not satisfactorily formed and when the amount exceeds 15% by weight, a large amount of free alumina ($Al_2O_3$) crystal is formed.

Accordingly, in both cases, the removability of slag is considerably deteriorated.

Metal carbonates decompose and generate $CO_2$ gas owing to the welding heat and prevent the entrance of nitrogen into the weld puddle and reduce the hydrogen partial pressure in the arc atmosphere to decrease the amount of diffusible hydrogen in the weld metal. The more advantageous feature due to the addition of carbonates is that the molten metal's flow in the weld puddle is stabilized and a concaved bead configuration is obtained and then the formation of undercutting and slag inclusion is noticeably suppressed. When the amount of metal carbonates is less than 10% by weight in the flux, the molten metal is unstable and weld defects such as undercutting and slag inclusion are apt to occur and the amount of diffusible hydrogen in the weld metal is increased and hydrogen cracks may be induced. When the amount exceeds 60% by weight in the flux, the evolution of $CO_2$ becomes excessive and a strong gas flow is generated in the arc cave and the molten metal flow is considerably disturbed and thereby undercutting and slag inclusion are formed.

In this case, the optimum amounts of metal carbonates added to the flux are 8 to 25% by weight of $BaCO_3$, 2 to 15% by weight of $CaCO_3$ and a total amount of at least one of $Li_2CO_3$, $Na_2CO_3$, $MnCO_3$ and $MgCO_3$ of from 4 to 15% by weight. When the amount of $BaCO_3$ is less than 8% by weight, the bead configuration is convex, the removability of slag is inferior and slag inclusion is caused. When the amount exceeds 25% by weight, the ripple pattern of the bead surface becomes rough and the slag is readily struck and undercutting is apt to be formed. When $CaCO_3$ is less than 2% by weight, the amount of diffusible hydrogen in the weld metal is increased and hydrogen cracks are readily induced and the molten metal flow becomes unstable and weld defects such as irregular bead surface, undercutting and slag inclusion are apt to be formed. When the amount exceeds 15% by weight, the removability of slag is deteriorated and the molten metal causes an excessive convection in the weld puddle and undercutting and slag inclusion are caused. $Li_2CO_3$, $Na_2CO_3$, $MnCO_3$ and $MgCO_3$ have relatively low melting points and temperatures at which they decompose to form $CO_2$ gas so that the decomposed gas formed by the welding heat is gradually discharged at an early stage and the molten metal flow and the arc phenomena are stabilized and therefore even if the height of the flux dispersed is varied, a good bead configuration is always obtained and the formation of undercutting and slag inclusion is considerably eliminated and high speed welding is feasible. When the total amount of $Li_2CO_3$, $Na_2CO_3$, $MnCO_3$ and $MgCO_3$ is less than 4% by weight, the stable evolution of the gas does not occur and when the height of the flux dispersed is varied, there is a risk that undercutting and slag inclusion may be caused. When the amount exceeds 15% by weight, the melting point of the weld slag is too low and the ripple pattern of the weld bead becomes rough and in particular, undercutting is readily caused at a welding speed of more than 35 cm/min. When the welding speed is less than 35 cm/min, welding can be favorably carried out with a total amount of less than 20% by weight.

$CaF_2$ is a necessary fluorine source for forming barium mica and further has a great influence upon the volume expansion behaviour of the weld slag in the cooling process after the solidification of the weld slag and the added amount is an important factor for improving the removability of the slag. That is, as shown in Fig. 3, in the course ($T_1 \rightarrow T_2 \rightarrow T_3 \rightarrow T_4$) of cooling after the solidification (at temperature $T_1$), when an amount of $CaF_2$ in the flux is less than 7% by weight and more than 18% by weight, expansion due to the variation of the crystal structure occurs between the temperature $T_2$ and the temperature $T_3$ and the contractions of the slags at room temperature ($T_4$) are $\Delta l_1$ and $\Delta l_2$ respectively, while when the amount of $CaF_2$ is 7 to 18% by weight, there is no expansion between $T_2$ and $T_3$ and substantially uniform thermal contraction occurs from $T_1$ to $T_4$ and therefore the contraction at room temperature ($T_4$) is $\Delta l_3$, which is larger than $\Delta l_1$ and $\Delta l_2$ and this is an essential factor which considerably improves the removability of slag. Accordingly, $CaF_2$ is limited from 7 to 18%.

The data in Fig. 3 were obtained by the following method described with reference to Fig. 4. The weld slags were remelted in a carbon crucible and rod-shaped samples 1 having a diameter of 8 mm and a length of 50 mm were prepared and the lengths of said samples were measured by a thermal expansion measuring apparatus. The change in length of the sample 1 when cooled at a rate of about 5°C/min in a quartz tube 4 was measured by means of a displacement meter 3 connected to the sample by connector 2. In Fig. 4, part 5 is a recorder.

Metal powders may be added for deoxidizing, alloying or increasing the deposition rate and examples are Si, Mn, Al, Ti, Zr, Mo, Ni, Fe and the like which may be added alone or in alloyed form. When the total amount of one or more of these metal powders is more than 20% by weight in the flux, the kneading ability of the flux is deteriorated and an inadequate distribution in size of flux powders causes unstable molten metal flow and welding defects are caused. Thus, the metal powders are preferred to be less than 20% by weight.

Concerning the other flux components, metal oxides, such as $TiO_2$, MnO, FeO, $Fe_2O_3$, $Fe_3O_4$ and $ZrO_2$, and impurities may be mentioned but the total amount of these components is preferred to be less than 20% by weight in the flux. When the amount exceeds 20% by weight, the above mentioned effectiveness of the major components are lost and the removability of slag becomes inferior.

When the ratio of the total amount of the basic components (MgO, BaO, CaO and $CaF_2$) to the total amount of the acidic components ($SiO_2$, $Al_2O_3$, $TiO_2$, MnO and $ZrO_2$) in the flux viz.

$$\frac{MgO + BaO + CaO + CaF_2}{SiO_2 + Al_2O_3 + TiO_2 + MnO + ZrO_2}$$

is less than 2.3, a glassy slag is liable to be formed and the removability of slag is relatively good. But, the levels of oxygen and diffusible hydrogen in the weld metal become very high and the mechanical properties of the weld metal are deteriorated and hydrogen cracks are readily induced and it is not desirable to apply such fluxes to materials for which high qualities are required, such a high strength steels, low alloy steels, and heavy-thickness steels which need a large number of welding passes. When said ratio exceeds 4.5, the melting point of the slag is raised and the appearance of the bead surface is deteriorated and further the removability of slag becomes inferior and welding defects are apt to be formed.

As mentioned above, the flux composition of the present invention has the remarkable effect of improving the removability of slag and preventing the formation of welding defects, and enables the use of the one pass-one layer submerged arc welding process in a narrow groove wherein the root gap is less than 25 mm, and attains an improvement in welding productivity, a reduction of cost, the simplification of the welding operations, and welding joints of high quality. In this case, when the distance between the groove faces is larger than 25 mm, the wetness of the weld bead and both side walls is poor, and lack of fusion and slag inclusion are readily formed. When a narrow gap groove of less than 25 mm is deposited by the one pass-one layer welding technique, sound side wall fusion can be satisfactorily accomplished and no welding defect is formed. When the distance is larger than 25 mm, multi pass-one layer technique is preferable in view of the prevention of welding defects.

The following Examples are given for the purpose of illustration of this invention and are not intended as limitations thereof.

Example 1

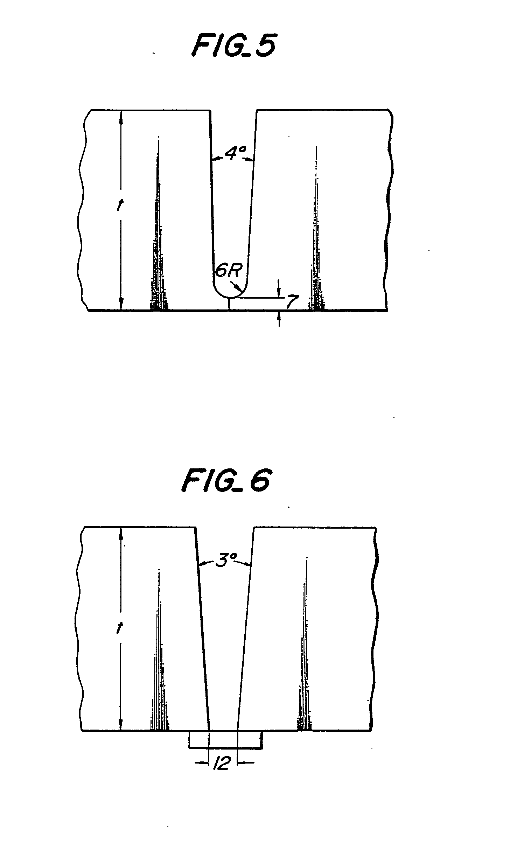

By using the 14 kinds of bonded fluxes shown in the following Table 1, 14 layer welding by the one pass-one layer technique was applied to a 70 mm-thick ASTM A516 Gr. 70 steel plate (chemical components: C: 0.147%, Si: 0.25%, Mn: 1.22%, P: 0.015%, S: 0.003%, Ni: 0.19%) having a narrow groove (shown in Fig. 5) wherein the root radius is 6 mm and the bevel angle is 4°. The wire used was KW—50C (C: 0.08%, Si: 0.035%, Mn: 1.50%, P: 0.013%, S: 0.005%, Mo: 0.50%) having a diameter of 3.2 mm or 4 mm.

TABLE 1(a) – 1

| | | FLUX COMPOSITION (%) | | | | | | | | | | | | |
|---|---|---|---|---|---|---|---|---|---|---|---|---|---|---|
| | | Slag forming component | | | | | | Gas forming component | | | | | | |
| | | *2) MgO | *2) BaO | *2) CaO | $SiO_2$ | $Al_2O_3$ | $CaF_2$ | *3) $BaCO_3$ | *3) $CaCO_3$ | *3) $MgCO_3$ | $Li_2CO_3$ | $Na_2CO_3$ | $MnCO_3$ | Total |
| Present invention | F –1 | 24 | 14 | 3 | 10 | 8 | 18 | 18 | 4 | 3 | 1 | – | – | 26 |
| | 2 | 36 | 10 | 5 | 11 | 3 | 10 | 10 | 7 | 6 | – | – | – | 23 |
| | 3 | 21 | 13 | 10 | 13 | 5 | 13 | 17 | 15 | – | 3 | 1 | 1 | 37 |
| | 4 | 41 | 16 | 2 | 12 | 8 | 15 | 8 | 3 | – | – | – | – | 11 |
| | 5 | 24 | 18 | 9 | 15 | 3 | 18 | 10 | – | 1 | – | – | – | 11 |
| | 6 | 36 | 13 | 3 | 10 | 14 | 15 | 5 | 1 | – | 6 | – | – | 12 |
| | 7 | 34 | 7 | 9 | 12 | 5 | 10 | 6 | 13 | – | 10 | – | 4 | 33 |
| | 8 | 20 | 19 | 10 | 10 | 3 | 7 | 25 | 15 | 4 | 8 | 1 | 2 | 55 |
| | 9 | 27 | 20 | 8 | 16 | 3 | 8 | 25 | 15 | – | – | 2 | 3 | 45 |
| | 10 | 46 | 7 | – | 23 | 3 | 7 | – | – | 15 | – | – | – | 15 |
| | 11 | 34 | 7 | 9 | 12 | 5 | 10 | 6 | 12 | 8 | 4 | 5 | – | 35 |

TABLE 1(b) – 1

| | | FLUX COMPOSITION (%) | | | | *1) Basicity ratio |
|---|---|---|---|---|---|---|
| | | Metal powder | | Remainder | | |
| | | Component | Total | *4) Component | Total | |
| Present invention | F – 1 | Fe–Si 4<br>Mn 2 | 6 | $TiO_2$ 7 | 7 | 2.4 |
| | 2 | – | 0 | $TiO_2$ 12<br>AlF 5 | 17 | 2.3 |
| | 3 | Fe–Si 2<br>Mn 1<br>iron powder 5 | 8 | – | 0 | 3.2 |
| | 4 | Fe–Si 3 | 3 | – | 0 | 3.7 |
| | 5 | Fe–Ti 2<br>Fe–Si 1 | 3 | $TiO_2$ 7 | 7 | 2.8 |
| | 6 | Fe–Al 1<br>Al–Mg 1 | 2 | – | 0 | 2.8 |
| | 7 | – | 0 | MnO 2 | 2 | 3.2 |
| | 8 | Fe–Si 1<br>Fe–Mn 1<br>Fe–Al 3 | 5 | – | 0 | 4.3 |
| | 9 | – | 0 | – | 0 | 3.3 |
| | 10 | Fe–Si 2<br>Fe–Mn 1<br>iron powder 3 | 6 | – | 0 | 2.3 |
| | 11 | – | 0 | – | 0 | 3.5 |

TABLE 1(a) – 2

| | | FLUX COMPOSITION (%) | | | | | | | | | | | | |
|---|---|---|---|---|---|---|---|---|---|---|---|---|---|---|
| | | Slag forming component | | | | | | Gas forming component | | | | | | |
| | | *2) $MgO$ | *2) $BaO$ | *2) $CaO$ | $SiO_2$ | $Al_2O_3$ | $CaF_2$ | *3) $BaCO_3$ | *3) $CaCO_3$ | *3) $MgCO_3$ | $Li_2CO_3$ | $Na_2CO_3$ | $MnCO_3$ | Total |
| | F–12 | 20 | 20 | 12 | 18 | 10 | 10 | 10 | 10 | – | 4 | – | – | 24 |
| Comparative example | 13 | 24 | 10 | 8 | 25 | 20 | 5 | 6 | 4 | 4 | – | – | – | 14 |
| | 14 | 20 | 21 | 10 | 3 | 12 | 20 | 20 | 18 | 4 | – | – | – | 42 |

*1: Basicity ratio: of the flux was calculated from the formula

$$\frac{MgO + BaO + CaO + CaF_2}{SiO_2 + Al_2O_3 + TiO_2 + MnO + ZrO_2}$$

*2: These metal oxides include amounts obtained by calculating the metal carbonates in *3 as metal oxides.

*3: Intentionally added components. Impurity component is not contained.

TABLE 1(b) — 2

| | | FLUX COMPOSITION (%) | | | | |
|---|---|---|---|---|---|---|
| | | Metal powder | | Remainder | | *1) Basicity ratio |
| | | Component | Total | *4) Component | Total | |
| Comparative example | F – 12 | – | 0 | – | 0 | 2.2 |
| | 13 | Fe–Si 1 | 1 | $TiO_2$ 2 | 2 | 1.0 |
| | 14 | – | 0 | – | 0 | 4.7 |

The welding conditions and the welding results are shown in the following Table 2. The fluxes F—1 to F—11 of the present invention were very excellent in the slag removability and the beads showed the concaved form and the side walls of the groove were satisfactorily fused. No defect was found in an ultrasonic test and a radiographic test and high quality welding joints were obtained. Particularly, the fluxes F—1 to F—3, F—6 to F—9 and F—11 can realize a sound welding performance at a high speed of about 35 to 50 cm/min as well as at a low speed of about 10 to 25 cm/min and can be applied to multi-electrode welding.

TABLE 2(a)

| Flux No. | 3.2 mmφ, 550A—29V—23 cm/min *1) | | | 4.0 mmφ, 700A—35V—35 cm/min *2) | | |
|---|---|---|---|---|---|---|
| | Slag removability | Undercut | Slag inclusion | Slag removability | Undercut | Slag inclusion |
| F-1 | ◎ | ◎ | ◎ | ◎ | ◎ | ◎ |
| 2 | ◎ | ◎ | ◎ | ◎ | ◎ | ◎ |
| 3 | ◎ | ◎ | ◎ | ◎ | ◎ | ◎ |
| 4 | ◎ | ◎ | ◎ | ○ | ○ | ◎ |
| 5 | ◎ | ◎ | ◎ | ○ | ○ | ◎ |
| 6 | ◎ | ◎ | ◎ | ◎ | ◎ | ◎ |
| 7 | ◎ | ◎ | ◎ | ◎ | ◎ | ◎ |
| 8 | ◎ | ◎ | ◎ | ◎ | ◎ | ◎ |
| 9 | ◎ | ◎ | ◎ | ◎ | ◎ | ◎ |
| 10 | ◎ | ○ | ◎ | ○ | ○ | ◎ |

TABLE 2(b)

| Flux No. | 3.2 mmϕ, 550A—29V—23 cm/min *1) | | | 4.0 mmϕ, 700A—35V—35 cm/min *2) | | |
|---|---|---|---|---|---|---|
| | Slag removability | Undercut | Slag inclusion | Slag removability | Undercut | Slag inclusion |
| F-11 | ◎ | ◎ | ○ | ○ | ○ | ○ |
| 12 | × | ○ | × | × | × | × |
| 13 | × | ○ | × | × | × | × |
| 14 | × | ○ | ○ | × | × | × |

Note: ◎: Very good ○: Good ×: Poor

*1, *2: Height of flux dispersed is 45 mm.

Example 2

JIS SM—50A 50 mm-thick steel plates (chemical components, C: 0.18%, Si: 0.41%, Mn: 1.45%, P: 0.020%, S: 0.004%) having a groove as shown in Fig. 5, were welded by using the combination of a wire KW—30C (chemical components, C: 0.07%, Si: 0.35%, Mn: 1.50%, P: 0.015%, S: 0.005%) and, as the flux, F—1, F—6 or F—7 shown in Table 1 under the conditions of the following Table 3. In this case, the weldability was compared by varying the height of the flux dispersed from 25 mm to 65 mm and the obtained results are shown in the following Table 4.

TABLE 3

| Wire diameter (mm) | Wire angle (deg) | Wire extending length (mm) | Height of flux dispersed (mm) | Welding current (A) | Welding voltage (V) | Travel speed (cm/min) | Heat input (KJ/cm) |
|---|---|---|---|---|---|---|---|
| 4.0 | 0 | 50 | 25 to 65 | 550 | 29 | 25 | 38 |

TABLE 4

| Flux No. | Height of flux dispersed (mm) | | | | |
|---|---|---|---|---|---|
| | 25 | 35 | 45 | 55 | 65 |
| F-1 | Good | Good | Good | Good | Good |
| 6 | Good | Good | Good | Good | Good |
| 7 | Good | Good | Good | Good | Good |

The fluxes F—1, F—6 and F—7 according to the present invention gave rise to good weldability even when the height of flux dispersed was varied from 25 mm to 65 mm and the bead configuration was concave and no welding defects were found.

Example 3

A groove portion having a root gap of 12 mm and a bevel angle of 3° as shown in Fig. 6 of 160 mm thick steel forgings ASTM A336 F—1 (chemical components, C: 0.25%, Si: 0.25%, Mn: 0.65%, P: 0.003%, S: 0.005%, Mo: 0.53%) was jointed by using a combination of a flux F—9 and a wire KWA—50C having a diameter of 3.2 mm. The welding conditions were as follows. The first pass was 400 A, 27 V, and 16 cm/min and the second and all succeeding passes were 550 A, 30 V, 23 cm/min and the total welding was completed in 47 passes. The preheating temperature was 100°C. The slag removability and the bead configuration in each pass was very good and no defect was found in the ultrasonic test and the radiographic test. The performances of the weld joint were satisfactory in strength, toughness, bend and ductility as shown in the following Table 5 and no variation of chemical compositions in the weld material through the full thickness was recognized.

TABLE 5

| Heat-*) treat-ment | Sampling position | Tensile test | | | | Side bend test | Impact test | | | Chemical compositions of weld metal (%) | | | |
|---|---|---|---|---|---|---|---|---|---|---|---|---|---|
| | | Yield strength ($kg/cm^2$) | Tensile strength ($kg/mm^2$) | Elongation (%) | Reduction in area (%) | | vE0 (kg·m) | vE—20 (kg·m) | vE40 (kg·m) | C | Si | Mn | Mo |
| A | $\frac{1}{4}$ t | 44.3 | 56.1 | 27 | 73 | Good | 15.7 | 12.8 | 9.3 | 0.05 | 0.37 | 1.54 | 0.51 |
| | $\frac{3}{4}$ t | 46.0 | 58.5 | 27 | 72 | Good | 15.5 | 10.5 | 7.8 | 0.07 | 0.36 | 1.47 | 0.51 |
| B | $\frac{1}{4}$ t | 41.9 | 54.8 | 26 | 70 | Good | 17.3 | 10.2 | 6.4 | | | | |
| | $\frac{3}{4}$ t | 43.3 | 55.9 | 27 | 70 | Good | 15.7 | 9.9 | 6.8 | | | | |

* A: 650°C × Hr PWHT

B: 690°C × Hr PWHT

Example 4

A groove having a root gap of 12 mm and a bevel angle of 3° in 75 mm thick steel plate ASTM A387 Gr 22 Cl 2 (chemical components, C: 0.13%, Si: 0.25%, Mn: 0.55%, P: 0.004%, S: 0.005%, Cr: 2.23%, and Mo: 0.98%) was jointed by one pass-one layer welding technique with a single electrode by using a combination of the flux F—3 in Table 1 and a wire KWT—210 (chemical components, C: 0.12%, Si: 0.15%, Mn: 0.65%, P: 0.004%, S: 0.003%, Cr: 2.45% and Mo: 1.0%) having a diameter of 4.0 mm. The welding conditions were 550 A, 28 V and 23 cm/min and the total welding was completed in 19 passes. By varying the interpass temperature from 50°C to 250°C, the sensitivity to transverse crack was determined. In the weld joint deposited at the preheating and interpass temperature of 250°C, the mechanical properties of the weld metal were investigated and the obtained results are shown in Fig. 7 and Table 6.

TABLE 6

| Flux No. | Chemical compositions of weld metal (%) | | | | | | | | | | Mechanical properties | | | | | | |
|---|---|---|---|---|---|---|---|---|---|---|---|---|---|---|---|---|---|
| | | | | | | | | | | | | | | Room temperature (23°C) | | 450°C | |
| | C | Si | Mn | P | S | Cr | Mo | O | N | Dif-*) fusible hydrogen content | Heat- **) treatment | vE—40 (kg·m) | vTr40 (°C) | Tensile strength (kg/mm²) | Elonga-tion (%) | Tensile strength (kg/mm²) | Elonga-tion (%) |
| F-3 | 0.09 | 0.21 | 0.73 | 0.008 | 0.006 | 2.28 | 1.0 | 0.0335 | 0.0043 | 0.75 | 690°C×8Hr | 7.8 | −51 | 63 | 25 | 49 | 20 |
| | | | | | | | | | | | 690°C×26Hr | 9.4 | −58 | 59 | 28 | 47 | 23 |

*) Unit of the diffusible hydrogen content is cc/100 g of deposited metal.

**) Heating rate is 50°C/hr,
Cooling rate is one at which the furnace is cooled (27°C/hr).

In the flux F—3 of the present invention, even when the preheating an interpass temperature was 50°C, no crack was formed, because the diffusible hydrogen level in the weld metal was considerably low.

Example 5

A groove having a bottom root gap of 12 mm and a bevel angle of 3° in high strength steel plates (chemical components, C: 0.09%, Si: 0.30%, Mn: 0.09%, P: 0.014%, S: 0.004%, Ni: 0.87%, Cr: 0.50% and Mo: 0.40%) having a tensile strength of 80 kg/mm$^2$ and a thickness of 40 mm, was deposited by one pass-one layer single electrode welding using a combination of the flux F—1 in Table 1 and a wire KW—103B (chemical components, C: 0.05%, Si: 0.40%, Mn: 1.40%, P: 0.007%, S: 0.007%, Ni: 2.70%, Cr: 0.5%, and Mo: 0.40%) having a diameter of 3.2 mm. The welding conditions were 600 A, 30 V and 30 cm/min and the joint was completed in 9 passes. The preheating and interpass temperature was 100°C to 125°C.

The removal of the slag in any pass was very easy, the bead showed the good concave form, and defects such as cold crack, hot crack, slag inclusion and the like were not induced. The toughness, vE—40 of the weld metal at the mid-thickness was 6.7 kg.m, no crack was formed in the side bend test and the tensile strength was 84.5 kg/min$^2$. A sound weld joint having satisfactory qualities was obtained.

As mentioned above, according to the present invention, the removing of the slag can be easily carried out and the molten metal flow in the weld puddle is stable. Even if the height of flux dispersed is varied, defects such as undercutting, slag inclusion, lack of fusion and the like are not caused and sound welded joints having a high quality can be obtained.

The fluxes of the present invention can apply to both one pass-one layer and multi-pass welding using grooves of I-shape, X-shape, Y-shape, V-shape and other shapes in mild steel, high strength steel low alloy steels and the like. This process is not limited to only one pass-one layer but can be used for multi-pass welding.

**Claims**

1. A basic bonded flux for submerged arc welding and having a composition such that crystals of periclase and barium mica are formed in the slag after welding characterised in that the flux comprises:

(i) from 10 to 60% by weight of one or more metal carbonates as gas forming component, and

(ii) a slag forming component comprising BaO, MgO, $SiO_2$, $Al_2O_3$, $CaF_2$ and optionally CaO,

wherein the flux comprises from 5 to 20% by weight of BaO, not more than 10% by weight of CaO, from 20 to 50% by weight of MgO, from 6 to 25% by weight of $SiO_2$, from 3 to 15% by weight of $Al_2O_3$ and from 7 to 18% by weight of $CaF_2$, the values for BaO, CaO and MgO including any $BaCO_3$, $CaCO_3$ and $MgCO_3$, expressed as oxide, present in the gas forming component and the basicity of the flux, expressed as the ratio between the basic and acidic components of the flux, being from 2.3 to 4.5.

2. A flux as claimed in claim 1, wherein the gas forming component comprises from 8 to 25% by weight of $BaCO_3$, from 2 to 15% by weight of $CaCO_3$ and from 4 to 15% by weight in total of at least one of $Li_2CO_3$, $Na_2CO_3$, $MnCO_3$ and $MgCO_3$.

3. A flux as claimed in claim 1 or 2 wherein the flux additionally comprises up to 20% by weight of a metal powder.

4. The use of flux as claimed in claim 1, 2 or 3 in one pass-one layer submerged arc welding applied to a groove in a steel plate having a thickness of more than 50 mm, wherein the root gap between the groove walls is less than 25 mm.

**Patentansprüche**

1. Basische agglomeriertes Schweißpulver für das Unterpulverschweißen, dessen Zusammensetzung eine solche ist, daß in der Schlacke nach dem Schweißen Kristalle von Periklas und Bariumglimmer entstehen, dadurch gekennzeichnet, daß das Schweißpulver

(i) von 10 bis 60 Gew.-% eines oder mehrerer Metallcarbonate als gasbildenden Bestandteil und

(ii) einen BaO, MgO, $SiO_2$, $Al_2O_3$, $CaF_2$ und gegebenenfalls CaO enthaltenden schlackenbildenden Bestandteil

enthält, wobei das Schweißpulver von 5 bis 20 Gew.-% BaO, nicht mehr als 10 Gew.-% CaO, von 20 bis 50 Gew.-% MgO, von 6 bis 25 Gew-% $SiO_2$, von 3 bis 15 Gew.-% $Al_2O_3$, von 7 bis 18 Gew.-% $CaF_2$ enthält, die Werte für BaO, CaO und MgO im gasbildenden Bestandteil enthaltenes und als Oxid ausgedrücktes $BaCO_3$, $CaCO_3$ und $MgCO_3$ umfassen und die als Verhältnis zwischen den basischen und den sauren Bestandteilen das Schweißpulvers ausgedrückte Basizität des Schweißpulvers 2,3 bis 4,5 beträgt.

2. Schweißpulver nach Anspruch 1, worin der gasbildende Bestandteil von 8 bis 25 Gew.-% $BaCO_3$, von 2 bis 15 Gew.-% $CaCO_3$ und insgesamt von 4 bis 15 Gew.-% zumindest einen der Stoffe $Li_2CO_3$, $Na_2CO_3$, $MnCO_3$ und $MgCO_3$ enthält.

3. Schweißpulver nach Anspruch 1 oder 2, worin das Schweißpulver zusätzlich bis zu 20 Gew.-% eines Metallpulvers enthält.

4. Verwendung eines Schweißpulvers der in Anspruch 1, 2 oder 3 beanspruchten Art beim Herstellen einer einzigen Schicht in einem einzigen Durchgang durch Unterpulverschweißen Schicht in einem einzigen Durchgang durch Unterpulverschweißen im Lichtbogen in der Anwendung auf eine Nut in einem

Stahlblech mit einer Dicke von mehr als 50 mm, wobei der Wurzelspalt zwischen den Nutwandungen weniger als 25 mm beträgt.

**Revendications**

1. Flux basique aggloméré pour le soudage à l'arc submergé ayant une composition telle que des cristaux de periclase et de mica au barium se forment dans le laitier, après le soudage caractérisé en ce que le flux comprend:

(i) de 10 à 60% en poids d'un ou plusieurs carbonates métalliques constituant le composant dégageant un gaz, et

(ii) un composant formant du laitier, constitué de $BaO$, $MgO$, $SiO_2$, $Al_2O_3$, $CaF_2$ et en option de $CaO$, dans lequel le flux comprend entre 5 et 20% en poids de $BaO$, pas plus de 10% en poids de $CaO$, entre 20 et 50% en poids de $MgO$, entre 6 et 25% en poids de $SiO_2$, entre 3 et 15% en poids de $Al_2O_3$ et entre 7 et 18% en poids de $CaF_2$, les teneurs en $BaO$, $CaO$ et $MgO$ comprenant les quantités éventuelles de $BaCO_3$, $CaCO_3$ et $MgCO_3$, exprimées en oxydes présents dans le composant dégageant du gaz et la basicité de flux, exprimée en rapport entre les composants basiques et acides du flux, étant comprise entre 2,3 et 4,5.

2. Flux selon la revendication 1, caractérisé en ce que le composant dégageant du gaz comprend entre 8 et 25% en poids de $BaCO_3$, entre 2 et 15% en poids de $CaCO_3$ et entre 4 et 15% en poids total d'au moins parmi $Li_2CO_3$, $NaCO_3$, $MnCO_3$ et $MgCO_3$.

3. Flux selon l'une des revendications 1 ou 2, caractérisé en ce que le flux comprend en plus jusqu'à 20% en poids d'une poudre métallique.

4. L'emploi d'un flux selon l'une des revendications 1,2 ou 3 pour un soudage à l'arc submergé à une passe-une couche, appliqué à une rainure d'une plaque d'acier ayant une épaisseur dépassant 50 mm, dans lequel la largeur entre les parois, à la base de la rainure, est inférieure à 25 mm.

FIG. 1

PRIOR ART

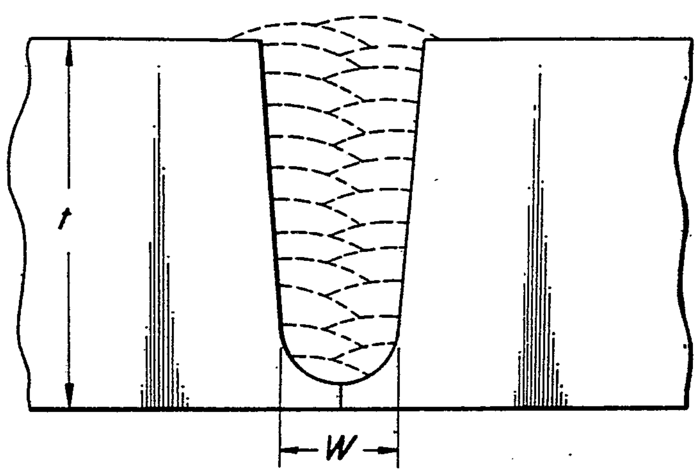


FIG. 2

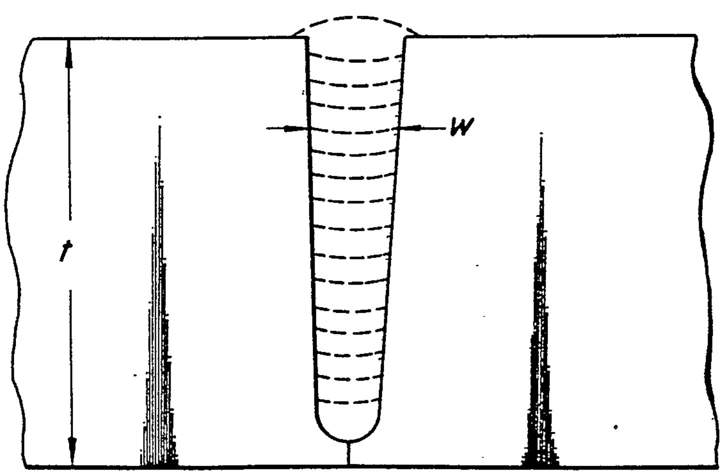

FIG. 3

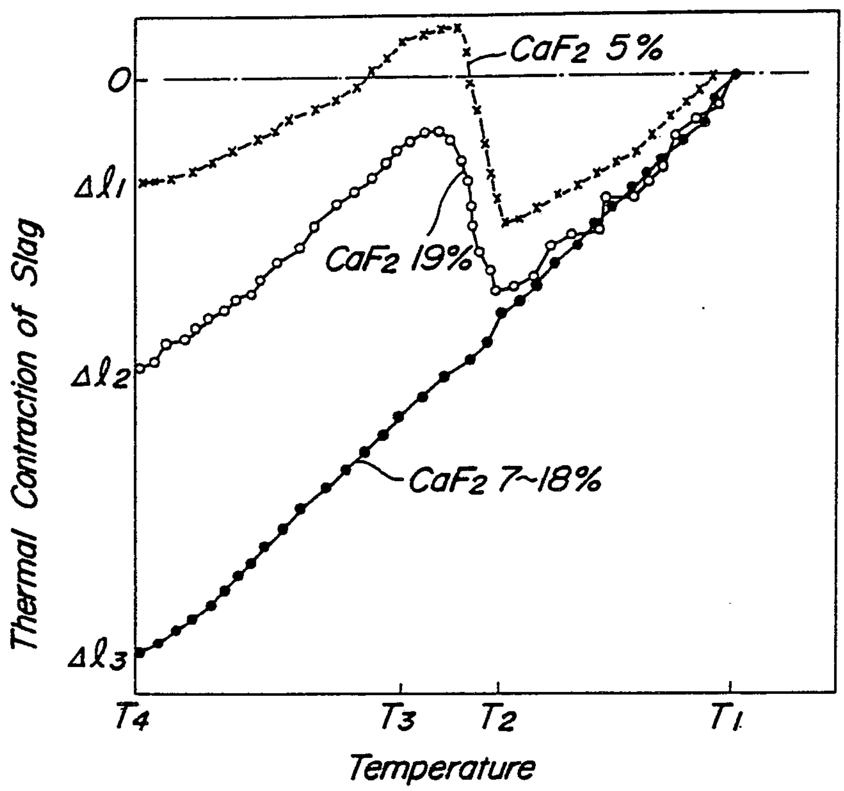
0
$\Delta l_1$
$\Delta l_2$
$\Delta l_3$
$CaF_2$ 5%
$CaF_2$ 19%
$CaF_2$ 7~18%
Thermal Contraction of Slag
$T_4$
$T_3$
$T_2$
$T_1$
Temperature

FIG. 4

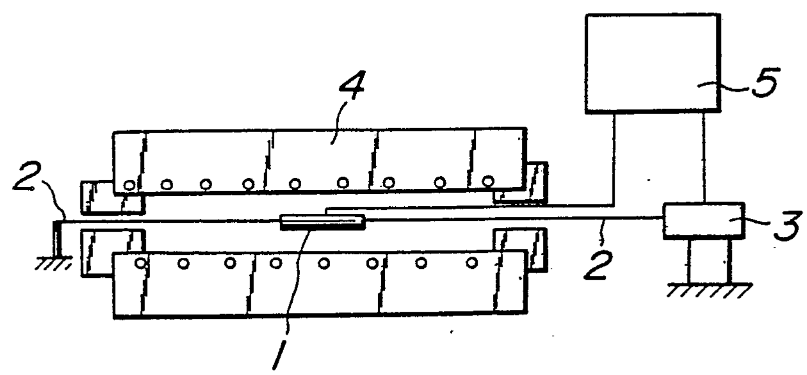
1
2
2
3
4
5

FIG_5

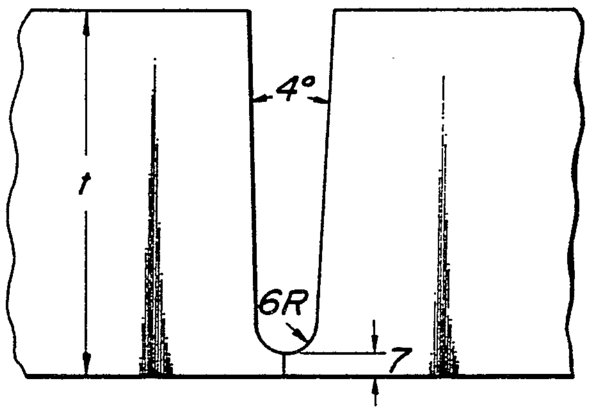


FIG_6